# EUROPEAN PATENT APPLICATION

(11) **EP 4 841 120 A1**
(43) Date of publication of application: **18.11.2026**
(21) Application number: 26178477.1
(22) Date of filing: 13.05.2026
(51) Int. Cl.: F16B 5/00, B29C 49/54, E04B 1/61, E04B 1/343

(54) **WALL PANEL WITH DOVETAIL CONNECTION**

(30) Priority: 15.05.2025 US 202563806477 P; 07.05.2026 US 202619670837
(71) Applicant: Lifetime Products, Inc., Clearfield, UT 84016 (US)
(72) Inventor: Watson, Neil Ben, Clearfield,UT, 84016 (US); Taylor, Kenneth William, Clearfield, UT, 84016 (US); Wendt, Jeremy Ross, Clearfield, UT, 84016 (US); Jones, Nathan Craig, Clearfield, UT, 84016 (US); Russell, Bryan, Clearfield, UT, 84016 (US); Norman, Dennis, Clearfield, UT, 84016 (US)
(74) Representative: Schwarz & Partner Patentanwälte GmbH

(57) **Abstract**

A panel system is provided for forming a barrier structure. Each panel includes opposing edges configured with complementary interlocking features, including protruding engagement elements and corresponding recesses. The protruding engagement elements are receivable within the recesses of an adjacent panel to facilitate connection between panels. In some embodiments, the engagement elements and recesses include tapered or wedge-shaped geometries that assist in guiding alignment during assembly. Surface-to-surface engagement between the complementary features may provide resistance to lateral and shear forces, while overlapping or retaining structures may inhibit separation in a direction normal to the panel surfaces.

## Description

### CROSS-REFERENCE TO RELATED APPLICATIONS

This application claims the benefit of U.S. Provisional Patent Application No. 63/806,477, filed May 15, 2025. The foregoing is incorporated herein by reference in its entirety.

### TECHNOLOGICAL FIELD

One or more example embodiments are directed to panels, and associated mechanisms for connecting the panels. One example embodiment comprises a pair of panels configured to be releasably connected to each other with only a single mechanism, with two different mechanisms, or with three different mechanisms.

### SUMMARY

Various disclosed embodiments generally relate to structures, which may be made of plastic, that are configured to be releasably joined together with one or more connectors, which may likewise be made of plastic. While reference is made herein to shed panels, such an example is only for the purposes of illustrating various aspects of one or more embodiments, and is not intended to limit the scope of this disclosure, or the claims, in any way.

In an implementation, an assembly can include a first structure comprising a first edge, the first edge comprising a fist. The assembly can also include a second structure comprising a second edge, the second edge comprising a pocket configured to receive the fist. The fist can include a wedge-shaped profile that is narrower at an outer portion of the first edge and wider at a location spaced inward from the outer portion. The pocket can include a complementary wedge-shaped profile configured to receive the fist by relative movement of the first structure and the second structure in a first direction. The fist and the pocket can be configured to resist relative movement of the first structure and the second structure in a second direction transverse to the first direction. The fist can include a flange configured to engage a corresponding channel of the pocket to resist separation of the first structure from the second structure in a third direction transverse to both the first direction and the second direction.

In another implementation, an assembly can include a first structure and a second structure configured to be releasably engaged with one another in an end-to-end configuration. The assembly can include a first retention mechanism comprising a fist and a pocket defined along respective edges of the first structure and the second structure. The fist and the pocket can have complementary wedge-shaped profiles configured to permit engagement by relative movement of the first structure to the second structure in a first direction. The fist and the pocket can also resist relative movement in a second direction transverse to the first direction. The assembly can also include a second retention mechanism comprising one or more flanges associated with the fist. The one or more flanges can be configured to (i) engage a corresponding channel of the pocket and (ii) to resist separation of the first structure and the second structure in a third direction transverse to both the first direction and the second direction. The assembly can also include a third retention mechanism comprising a connector configured to engage both the first structure and the second structure to retain the first structure and the second structure in the engaged configuration.

In yet another implementation, a method for creating a feature in a molded includes inflating a parison of melted plastic to form a molded part. The method can also include closing a mold about the parison, wherein the mold comprises a static feature and a moving core, wherein both the static feature and the moving core are arranged for contact with the parison when the mold is closed. The method can also include adjusting a position of the moving core, from an extended position to a retracted position. The method can further include forming, with the static feature, a recessed portion in the molded part. The method can still further include forming, with the moving core, an undercut feature in the molded part adjacent to the recessed portion. The method can also include moving the moving core from the retracted position to the extended position so as to release the molded part from the mold.

Another example of such a mechanism may comprise other respective complementary structures, included in first and second panels, that cooperate with a connector to keep the two panels in compression with each other so that neither panel can be lifted off of the other panel while the connector is in place.

In an embodiment, structures, such as the panels, may have a unitary, single-piece construction created using a blow-molding process and/or other processes. One or more panels may comprise respective elements of a structure, such as a shed, but that is not required.

The embodiments disclosed herein do not constitute an exhaustive summary or enumeration of all possible embodiments. It should be noted that nothing herein should be construed as constituting an essential or indispensable element of any embodiment. Rather, and as the person of ordinary skill in the art will appreciate, various aspects of the disclosed embodiments may be combined in a variety of ways so as to define yet further embodiments. Such further embodiments are considered as being within the scope of this disclosure. As well, none of the embodiments embraced within the scope of this disclosure should be construed as resolving, or being limited to the resolution of, any particular technical problem(s). Nor should such embodiments be construed to implement, or be limited to implementation of, any particular technical effect(s).

Example embodiments may provide various advantages relative to conventional structures and devices. For example, an embodiment may enable two structures, such as panels, for example, to be quickly and releasably connected together, and taken apart, without requiring the use of any tools. An embodiment may provide resistance to shear forces that may be exerted on two structures. An embodiment may provide resistance to the two connected panels to keep them in tension with each other so that neither panel can be lifted off of the other panel unless a tension force is overcome. Various other advantages of one or more embodiments will be apparent from this disclosure.

### BRIEF DESCRIPTION OF THE DRAWINGS

In order to describe the manner in which at least some of the advantages and features of one or more embodiments may be obtained, a more particular description of embodiments will be rendered by reference to specific embodiments thereof which are illustrated in the appended drawings. Understanding that these drawings depict only typical embodiments and are not therefore to be considered to be limiting of the scope of this disclosure, embodiments will be described and explained with additional specificity and detail through the use of the accompanying drawings.
Figure 1 is a perspective view of two panels, according to one example embodiment.
Figure 2 is a front view of two panels, according to one embodiment.
Figure 3 is another partial perspective view of a panel comprising a pocket, according to one embodiment.
Figure 4 is a partial perspective view of the respective complementary structures of a first panel and a second panel, according to one embodiment.
Figure 5 is another partial perspective view of the respective complementary structures of a first panel and a second panel, according to one embodiment.
Figure 6 is a detail view of a second complementary structure, in the form of a recess, of a panel connecting mechanism, according to one embodiment.
Figure 7 is a detail view of a first complementary structure, in the form of a projection, configured to engage the second complementary structure of Figure 6, according to one embodiment.
Figure 8 is a detail view of the first complementary structure, in the form of a fist, according to one embodiment.
Figure 9 is a detail view of a second complementary structure, in the form of a pocket, according to one embodiment.
Figure 10 is a side view of the pocket of Figure 9, according to one embodiment.
Figure 11 is a partial perspective view showing a fist, according to one embodiment.
Figure 12 is a detail view showing two panels fully engaged with each other, according to one embodiment.
Figure 13 is a detail view showing respective recesses, apertures, and an associated connector, according to one embodiment.
Figure 14 is a partial section view showing the recess and aperture of Figure 13 and their arrangement with respect to each other, according to an embodiment.
Figure 15 discloses aspects of a device, and initial stages of an associated process, for creating a feature of a panel or other structure, according to one embodiment.
Figure 16 discloses aspects of device, and its use during a blow molding process, for creating a feature of a panel or other structure, according to one embodiment.
Figure 17 discloses aspects of one example feature created by a device and process, according to one embodiment.

### DETAILED DESCRIPTION OF EXAMPLE EMBODIMENTS

One or more disclosed embodiments generally relate to various structures, and elements for connecting, such as in a releasable manner for example, those structures. In one example embodiment, such structures may comprise panels of a shed, such as may be used outdoors for tool storage and/or other purposes. More generally, example embodiments extend to any structures that may be releasably connected together with, or without, one or more connectors, which may be reusable, such as in the examples disclosed herein.

### A. General Aspects of Some Example Structures

Example structures and elements, including but not limited to panels, within the scope of this disclosure may be made of any suitable material(s), including plastics such as high-density polyethylene (HDPE). Depending upon the embodiment, a structure, such as a panel for example, may be formed by any of blow-molding, compression molding, roto-molding, injection molding, thermoforming, vacuum molding, twin sheet molding, drape molding, or any group of one or more of these. The molded structures may be hollow or at least include one or more hollow portions. Such hollow portions may include, and/or be defined in whole or in part by, one or more tack-offs. As well, molded structures within the scope of this disclosure may include one or more compression-molded elements or features that are integral with the molded structure.

In any of the disclosed embodiments, a blow-molded structure may be in the form of a unitary, one-piece structure that is substantially hollow and/or includes a substantially hollow portion. Thus, such embodiments may have an interior that is partly or completely hollow. Such embodiments may also include, disposed in the interior, one or more depressions, sometimes referred to as "tack-offs." In such embodiments, these tack-offs may be integrally formed as part of a unitary, one-piece structure during the blow-molding process. The depressions may extend from a first interior surface of the blow-molded structure toward a second interior surface of the blow-molded structure. The ends of one or more depressions may contact or engage the second surface, or the ends of one or more of the depressions may be spaced apart from the second surface by a distance (e.g., wherein a hollow volume exists at least partially between the first and second surface). In some instances, one or more depressions on a first interior surface may be substantially aligned with corresponding depressions on a second interior surface, and one or more depressions on the first interior surface may contact one or more corresponding depressions on the second interior surface or, alternatively, one or more depressions on the first interior surface may be spaced apart from corresponding depressions on the second interior surface. In still other instances, depressions that contact each other and depressions that are spaced apart from each other may both be present in a blow-molded structure. The depressions may be sized and configured to strengthen and/or reinforce the blow-molded structure.

Additionally, example embodiments may include one or more parting lines, which may comprise vestigial plastic portions present on a molded part after molding is complete. In general, the vestigial portions of plastic comprise plastic that has escaped into a joint between portions of a mold. Additionally, or alternatively, a finished molded part may include visible indicia, such as parting lines, for example, where vestigial portions of plastic have been removed from a molded part, such as by grinding, for example.

The vestigial portions of plastic, and the corresponding parting lines, may be formed, and/or located at a junction of the halves of a mold, or mold portion, that is used to make the molded part. That is, the vestigial portions of plastic may be formed when two portions of a mold come together during a molding process.

Example embodiments may include elements such as parting lines. In some particular embodiments, a parting line may extend along part, or all, of the length of a molded element such as a panel. Embodiments may include one or more parting lines formed by compression molding, and/or one or more parting lines formed by blow molding.

### B. Aspects of example embodiments of a structure

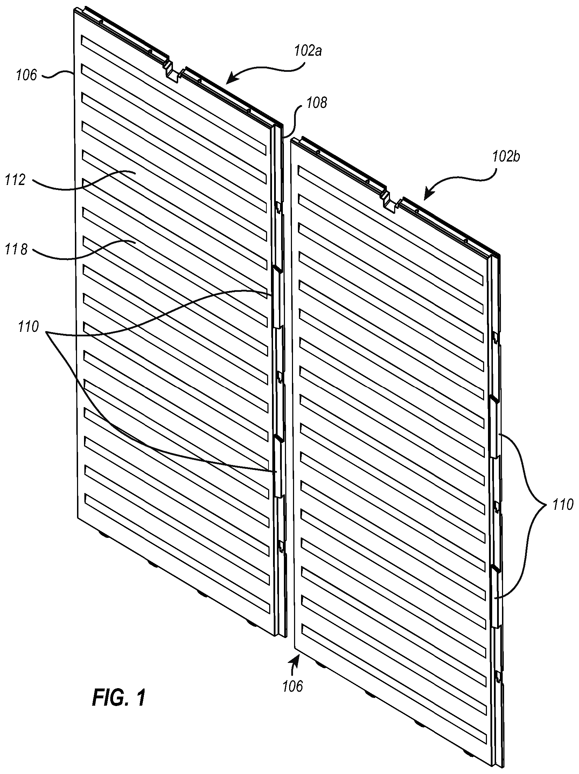

With reference now to Figures 1-12, details are provided concerning aspects of some example embodiments. Such embodiments include, but are not limited to, structures such as panels and connectors configured to releasably connect to one another. It is noted that while reference is made herein to a 'dovetail' configuration that may comprise one or more 'fists' (110) and 'pockets' configured to engage each other, such a configuration is provided only by way of illustration and is not intended to limit the scope of this disclosure, or of any claims, in any way. With reference to the fist of a human hand in a closed position for purposes of illustration, the extension portions, or flange edges 800a, 800b, are roughly analogous to the side knuckles of a hand in a closed position, while channels 802a, 802b would be roughly analogous in shape to the wrist. With more particular reference to the present drawings, a fist, as understood herein, comprises an example structural implementation of a projection or protrusion configured to be received in a recess, while a pocket comprises an example structural implementation of a recess configured to receive a projection.

### B.1 Aspects of example structures

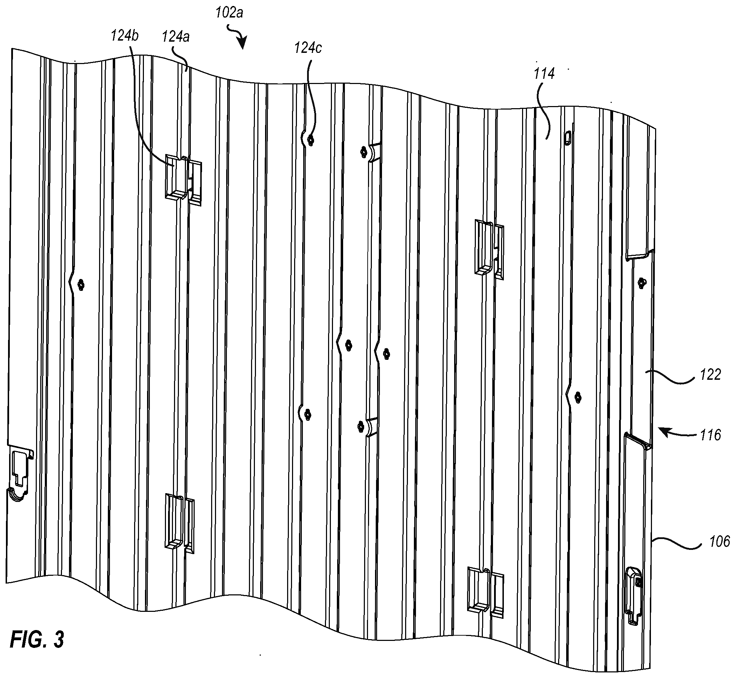

With reference first to the example of Figures 1-3, an embodiment may comprise one or more panels 102a and 102b. As shown, the panels 102a and 102b include, along one or more of their respective edges (e.g., a first edge 106 or a second edge 108), one or more fists 110, configured to engage, for example, a corresponding pocket (see Figure 3). As seen by comparing the front surface 112 of the panel 102a and the back surface 114 of the panel 102a, shown in Figures 1 and 3, respectively, the fists 110 may be positioned on one side of the panel 102a, and the pockets 116 on the back surface 114 of the panel 102a. Any number of fists 110 and pockets 116 may be provided in a panel 102a. The fists 110 and pockets 116 need not be any particular size, so long as they are configured and arranged to interact with corresponding pockets and fists, respectively, of another panel, such as panel 102b shown in Figure 1. The example fists 110 and pockets 116 thus comprise example embodiments of complementary structures that are able to releasably engage each other.

Figure 1 illustrates a perspective view of a first panel 102a and a second panel 102b. As illustrated, the panels 102a and 102b may be configured to be arranged adjacent one another and releasably coupled in an end-to-end configuration. In this way, a plurality of such panels may be tiled or connected together to form a larger structure. Each of the panels 102a and 102b may include a first edge 106 and a second edge 108. In an embodiment, the first edge 106 may include one or more pockets (see, e.g., Figure 3), while the second edge 108 may include one or more fists 110 configured to be received within corresponding pockets of an adjacent panel.

In this manner, the panels 102a and 102b may be coupled together by aligning the fists 110 of one panel with the pockets of another panel and moving the panels relative to each other to engage the fists and pockets. The edges 106 and 108 may at least partially define an outermost perimeter of each panel 102a and 102b. In some embodiments, the edges 106 and 108 may be located on opposite sides of the panel, such that the panel may be connected to adjacent panels along either edge. In at least one embodiment, edges 106 and 108 can be the longitudinal edges of a given panel.

As further shown in Figure 1, one or both of the panels 102a and 102b may include one or more surface features 118. Such features 118 may comprise corrugations, ribs, or other molded structures configured to provide structural support, rigidity, and/or impact resistance to the panel. In an embodiment, the features 118 may extend in a direction generally perpendicular to the direction of the edge 108 and its associated recessed surface 120. This arrangement may advantageously provide rigidity in multiple directions, for example, both along and transverse to the edge 108. In some embodiments, a front surface 112 of the panel may nevertheless be substantially planar and not include such features 118. In further embodiments, similar features may be provided on the back surface of the panel, and such features may extend in directions parallel to, perpendicular to, or otherwise oriented relative to the features 118.

As shown in Figure 1, the second edge 108 may include a recessed portion relative to the front surface 112. For example, as illustrated, a surface 120 may be recessed inward from the front surface 112. As a result, the thickness of the panel at or near the second edge 108 may be less than the thickness of the main body portion of the panel. The fists 110 may extend from the recessed surface 120 toward the front surface 112. In some embodiments, the fists 110 may terminate short of the front surface 112 such that the fists 110 do not extend fully to the plane defined by the front surface 112. This configuration may, for example, facilitate engagement with a corresponding pocket while maintaining the panel's desired external profile. Accordingly, fists 110 can be integral to the panel they are formed on or into. In an embodiment, a fist may be formed by compression molding simultaneously with the panel being formed by a blow molding process. The compression molding operation may take place partly or completely within the mold used for the blow molding process.

Though illustrated along edges 106 and 108, in an embodiment, fists 110 or pockets 116 may be positioned along only one edge of a panel 102a, or may be positioned along more than one edge of a panel 102a. As discussed in further detail below, in one embodiment, a fist such as the fist 110, and a pocket such as the pocket 116, may together define a dovetail configuration.

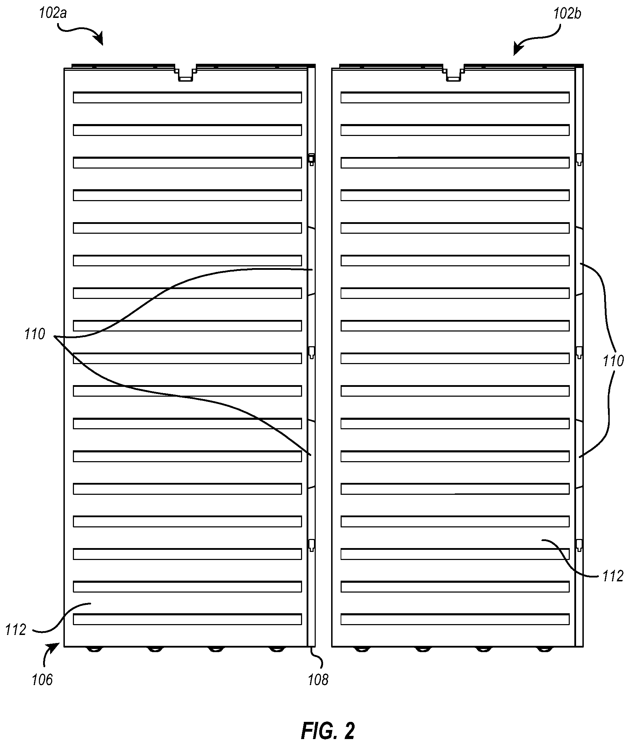

Figure 2 illustrates a front view of a side-by-side arrangement of the panels 102a and 102b, arranged similarly to that shown in Figure 1. In an embodiment, the panels 102a and 102b may be identical or substantially identical to each other, such that each panel includes the same arrangement and or number of edges, fists, pockets, and structural features. This configuration may simplify manufacturing and allow any panel to be connected to any other panel in a modular manner.

As illustrated in Figure 2, the front surfaces 112 of the panels 102a and 102b may be arranged in a generally coplanar manner when the panels are positioned adjacent to one another. In this way, a plurality of panels may be connected together to form a continuous surface, such as a wall or barrier. In some embodiments, adjacent panels may be substantially flush with one another, while in other embodiments, minor gaps or offsets may be present, for example, due to manufacturing tolerances or design considerations.

The fists 110 and corresponding pockets (not visible in Figure 2, see Figure 3) may be distributed along at least a portion of the respective edges 106 and 108. While two fists 110 are illustrated along the edge 108, the number of fists may vary depending on the embodiment. The number and spacing of the fists 110 may be selected to distribute loads along the edge, for example, to improve resistance to shear forces and reduce localized stress concentrations. The fists 110 and corresponding pockets may also function as alignment features during assembly, helping to guide adjacent panels into a desired relative position and maintain alignment when the panels are connected.

With reference now to Figure 3, a rear view of a portion of the panel 102a is shown, illustrating a back surface 114 of the panel. As shown, the panel 102a includes the edge 106, along which one or more pockets 116 may be formed. Each pocket 116 may comprise a recessed portion relative to the back surface 114. For example, a surface 122 defining at least a portion of the pocket 116 may be recessed inward from the back surface 114 and toward the front surface 112 of the panel. In this way, the pocket 116 may extend into the thickness of the panel 102a.

Similar to the fists described herein, the pockets 116 may include a tapered or wedge-shaped configuration. For example, a pocket 116 may have a relatively wider opening at or near an outer portion of the edge 106, and may taper to a narrower portion at a location spaced inward from the edge 106. This configuration may facilitate engagement with a complementary fist and contribute to the retention of adjacent panels when connected. The taper or wedge-like nature can advantageously assist in alignment, as a narrower portion of a corresponding fist may initially enter the wider opening of the pocket and be guided into proper alignment as the fist is advanced further into the pocket.

As shown in Figure 3, the back surface 114 of the panel 102a may include various additional features. For example, one or more features 124a may comprise corrugations, ribs, channels, or slots that extend in a direction generally parallel to the edge 106. Such features may provide structural reinforcement and stiffness to the panel. In some embodiments, the back surface 114 may further include one or more features 124b, which can be junctions or connection points that may be configured to interface with other components or attachments. The back surface 114 may include one or more fasteners or receptacles 124c configured to receive fasteners or other plug-like elements. In some embodiments, one or more of the receptacles 124c may comprise apertures or openings that extend into a hollow interior of the panel 102a. Such apertures may, in some implementations, function as drain holes or otherwise permit fluid communication with the panel's interior.

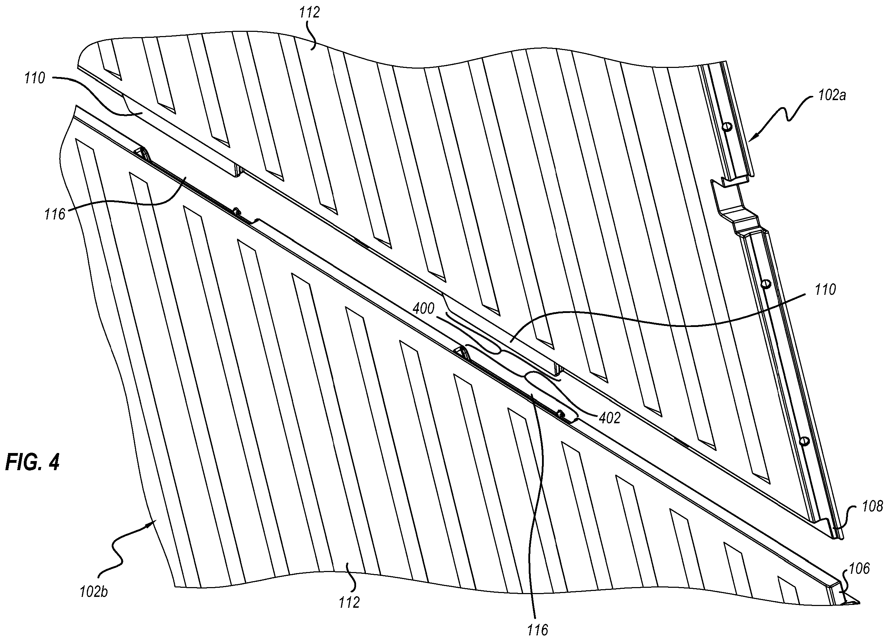

With attention now to the examples of Figures 4-7, additional partial views of example panels 102a and 102b are provided, illustrating details of the interconnection between adjacent panels. As shown in Figure 4, the panel 102a is positioned adjacent the panel 102b in a side-by-side or end-to-end arrangement. In this example, two fists 110 of the panel 102a are aligned with two corresponding pockets 116 of the panel 102b. Each fist 110 includes a narrow end 400, and each corresponding pocket 116 includes a wider end 402. The alignment of the narrow ends 400 with the wider ends 402 can facilitate initial positioning and engagement of the panels 102a and 102b.

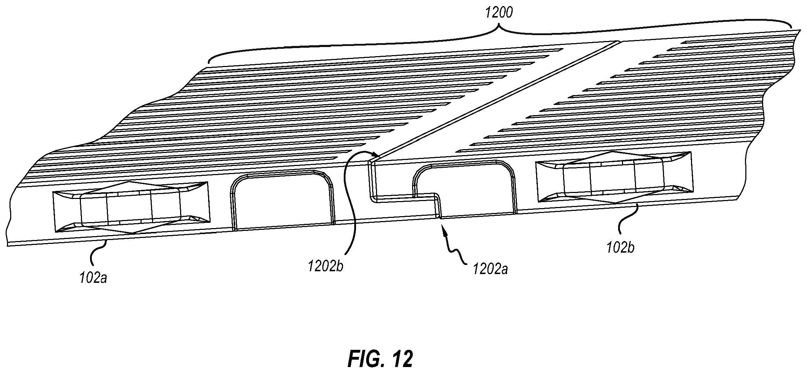

As further illustrated in Figure 4, the fist 110 and pocket 116 are integrated within the thickness of the respective panels 102a and 102b. In particular, the fist 110 extends from within the body of the panel 102a, while the pockets 116 are formed as recesses within the body of the panel 102b. As a result, when the panels 102a and 102b are fully engaged, front surfaces 112 of the respective panels 102a and 102b form a substantially continuous wall surface (see Figure 12). In this configuration, the fists 110 and pockets 116 are concealed within the assembled structure.

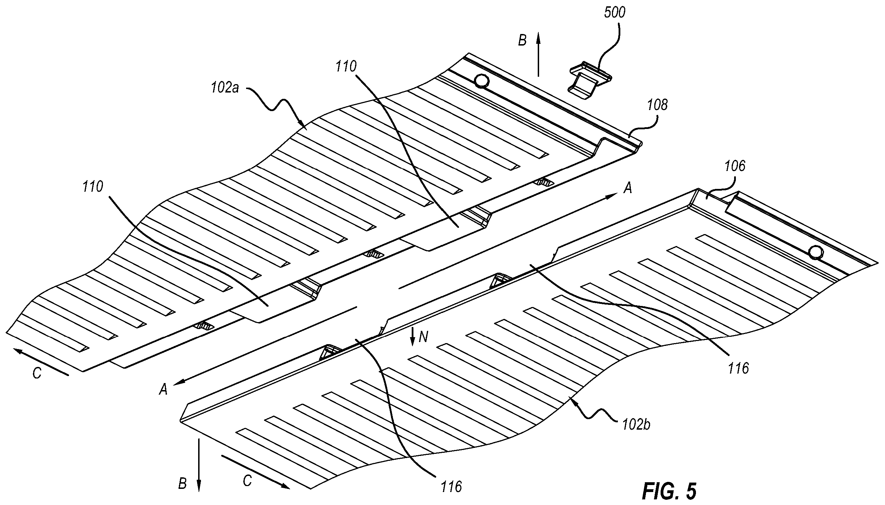

Figure 5 illustrates the relative movement between adjacent panels 102a and 102b with respect to directions A, B, and C. Direction(s) A are generally parallel to the longitudinal extent of edges 106 and 108 of the panels 102a and 102b. Direction(s) B are generally parallel to a normal vector N extending outward from the front surface 112. Direction(s) C are generally perpendicular to edges 106 and 108 and correspond to an axis along which the panels 102a and 102b are moved toward engagement or separation. A normal vector N, as used herein, refers to a vector that extends substantially perpendicular to a referenced surface. For example, with respect to a panel surface (e.g., front surface 112), the normal vector N extends outward from the surface along a direction orthogonal to the plane defined by that surface.

The interconnection between the fists 110 and pockets 116 can act to hinder the relative movement of the panels 102a and 102b along direction A. For example, once the fists 110 are received within the pockets 116, opposing lateral surfaces of the fists 110 bear against corresponding interior surfaces of the pockets 116. This surface-to-surface engagement can establish a shear-resisting interface that inhibits relative translation of the panels 102a and 102b in the direction(s) A. Thus, fists 110 and pockets 116 can act as a first retention mechanism for resisting the movement of two or more panels relative to each other.

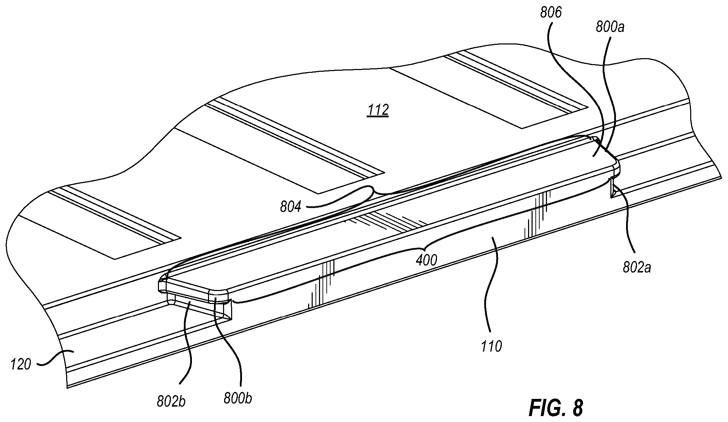

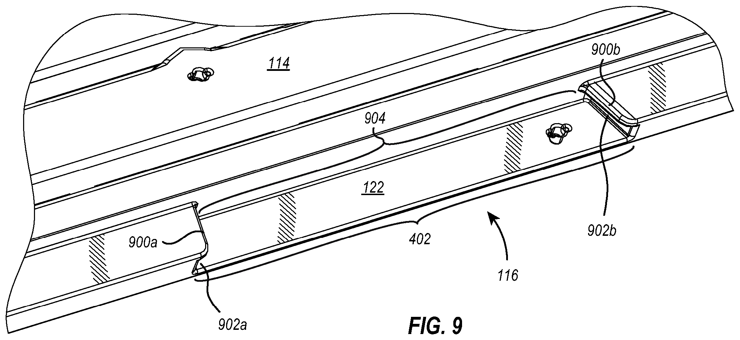

In addition, complementary features of the fists 110 and pockets 116 (see Figures 8 and 9) can act to hinder relative movement along direction B. For example, once the fists 110 are received within the pockets 116, one or more engagement surfaces of the fists 110 can interface with corresponding retention surfaces of the pockets 116. These features may include, for example, undercut portions, tabs, flanges, or other interlocking geometries that are oriented such that movement of the panel 102a relative to the panel 102b in the direction B causes the respective surfaces to bear against one another. This interaction can create a mechanical interference that resists separation in the direction(s) B, e.g., a direction parallel to the normal vector N of the front surface 112, thereby inhibiting lifting or outward displacement of one panel relative to the other. Accordingly, the complementary features of fists 110 and pockets 116 can act as a second retention mechanism for resisting the movement of two or more panels relative to each other.

Figure 5 illustrates a connector 500 configured to extend through portions of both panels 102a and 102b. The connector 500 can act to hinder the relative movement of the panels 102a and 102b along direction C. For example, the connector 500 may be received within one or more aligned openings, passages, or apertures formed in the respective panels 102a and 102b when the panels 102a and 102b are in an engaged configuration. Once inserted, the connector 500 can physically block relative movement of the panels 102a and 102b in the direction C, thereby inhibiting movement of the panels 102a and 102b toward a decoupled configuration.

In some embodiments, the connector 500 may comprise a body, pin, rod, fastener, clip, or other member configured to be inserted through the aligned portions of the panels 102a and 102b. The connector 500 may further include one or more retention features, such as enlarged heads, detents, flanges, arms, spring elements, threaded portions, or locking interfaces, which can act to maintain the connector 500 in position once installed. These features can further resist the removal of the connector 500 and thereby enhance resistance to the relative movement of the panels 102a and 102b along direction C. For example, an arm of connector 500 may extend into a receptacle, recess, or similar space within or through the two or more panels to hinder or resist movement between two or more panels.

Accordingly, the connector 500 can act as a third retention mechanism to resist the movement of two or more panels relative to each other, particularly along direction(s) C. In combination with the first retention mechanism associated with the fists 110 and pockets 116 resisting movement along direction A, and the second retention mechanism associated with complementary features of the fists 110 and pockets 116 resisting movement along direction B, the connector 500 cooperates to provide a multi-directional retention system that maintains the panels 102a and 102b in an engaged and secured configuration.

In some embodiments, the first, second, and third retention mechanisms may operate collectively such that each mechanism contributes to resisting movement not only in its primary direction, but also in directions otherwise primarily resisted by the other mechanisms. For example, engagement between the fists 110 and pockets 116 may provide secondary resistance to movement along directions B and C, while the connector 500 may provide secondary resistance to movement along directions A and B. In this manner, the retention mechanisms can share loads and stresses across multiple interfaces, thereby enhancing overall structural integrity and reducing localized stress concentrations within the panels 102a and 102b.

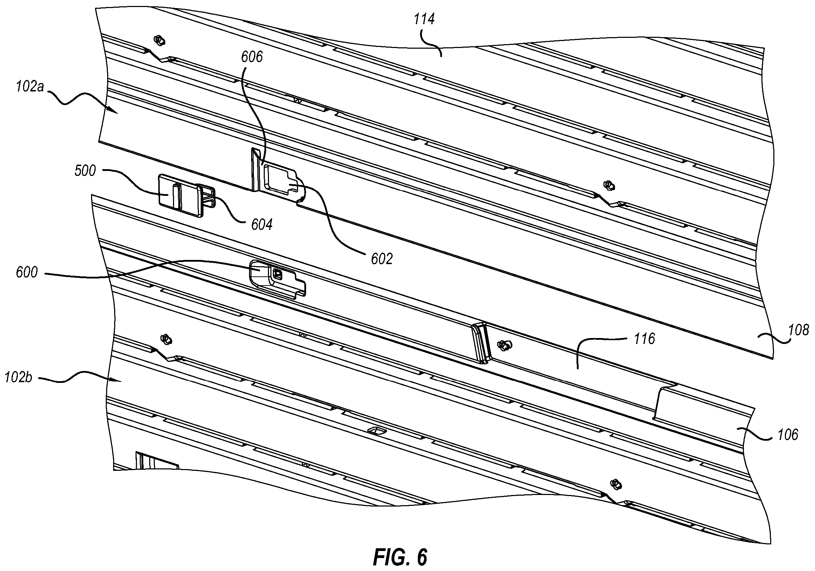

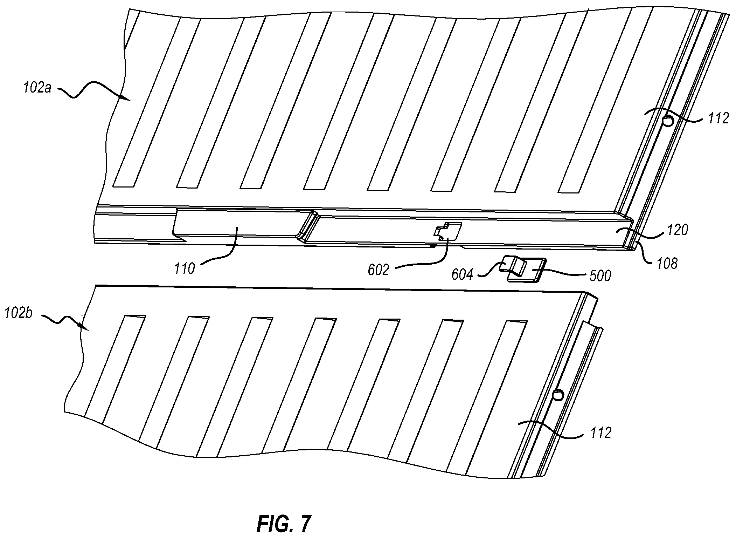

With reference to Figures 6 and 7, one or more connectors 500 may be provided to inhibit separation of adjacent panels 102a and 102b in a direction generally corresponding to the normal vector N extending from the front surface 112. In particular, the connectors 500 may act to prevent disengagement of the fists 110 from the pockets 116, such as by restricting relative movement in a direction corresponding to direction B described with respect to Figure 5. Connectors 500 may also act to restrict relative movement in directions A and C, as shown in Figure 5 as well.

Each connector 500 may be associated with an aperture 602 formed in one of the panels, such as panel 102a or 102b. The aperture 602 may extend through a thickness of the panel, for example, from the rear surface 114 toward the front surface 112, and may be positioned at or near an edge, such as edge 108. In some embodiments, the aperture 602 extends fully through the panel and intersects a surface such as surface 120 described with respect to Figure 1. The aperture 602 may include a recessed or countersunk portion 606 formed on a side of the panel opposite the surface 120, such as along the rear surface 114. The recessed portion 606 may be configured to receive at least a portion of the connector 500 such that the connector 500 sits in a substantially flush or partially recessed position relative to the rear surface 114. In some embodiments, the connector 500 may include a tab or protrusion that extends outward from the rear surface 114 when installed, thereby allowing a user to selectively engage, remove, or replace the connector 500.

The connector 500 may include an arm 604 extending from a body portion of the connector 500. The arm 604 may be configured to extend through the aperture 602 and into a corresponding recess 600 formed in an adjacent panel, such as along edge 106. The recess 600 may be a recessed feature formed into the edge 106, for example, within a relatively thicker portion of the edge, and may have a depth that is less than or approximately equal to the depth of the pockets 116 formed in the edge 106.

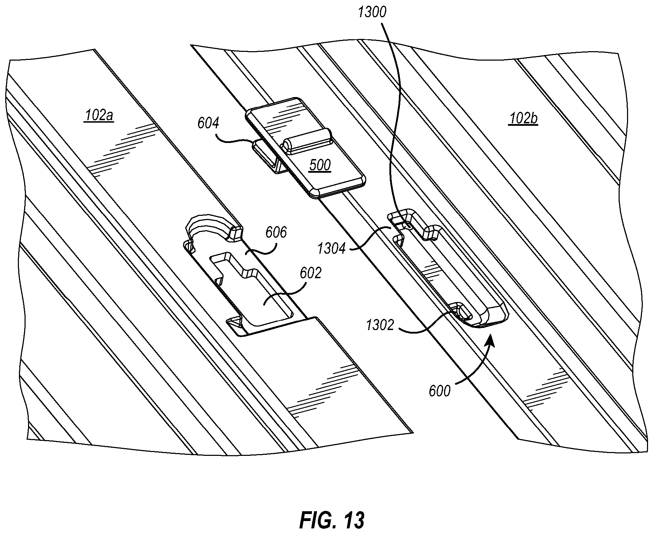

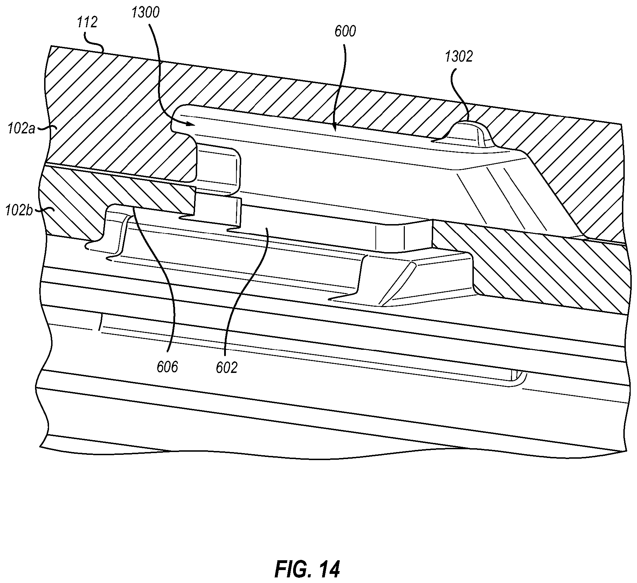

In some embodiments, the recess 600 may include an undercut portion (see Figures 13 and 14) configured to engage with the arm 604. This engagement may act to retain the connector 500 in position and resist withdrawal of the arm 604 from the recess 600. In certain configurations, the connector 500 may be placed in tension, for example, by the arm 604 being drawn into engagement with the undercut portion of the recess 600 while another portion of the connector 500 is seated within the recessed portion 606. This tensioned engagement can further enhance retention of the panels and resist relative separation.

Figure 7 illustrates a reverse-side view of the configuration shown in Figure 6, for example, showing the front surface 112 of the panels 102a and 102b. From this perspective, the aperture 602 can be seen extending through the panel at or near the edge 108 and intersecting the surface 120. The arm 604 of the connector 500 is also visible. In some embodiments, the arm 604 may extend through the aperture 602 and include a bent or angled portion that provides a surface configured to engage the undercut portion of the recess 600, thereby providing a surface or structure to retain the connector 500. As further illustrated, the fists 110 and the aperture 602 may be positioned along similar regions of the panel, such as along edge 108, such that the connector 500 operates in coordination with the fists 110 and pockets 116 to resist separation of the panels. Thus, in one embodiment, the connector 500 can assist in preventing the fist 110 from being lifted out of a respective pocket.

Turning next to Figures 8-11, these figures provide close-up views illustrating additional details of example fists and pockets, and their cooperative engagement between adjacent panels. For example, Figure 8 illustrates a fist 110 in greater detail. The fist 110 may include an upper surface 806 and one or more flange edges 800a, 800b. The flange edges 800a, 800b may define surfaces that are generally parallel to the surface 120, and that extend or overhang relative to the surface 120. In some embodiments, the flange edges 800a, 800b are at least partially defined by channels 802a, 802b formed as recesses into the body of the fist 110.

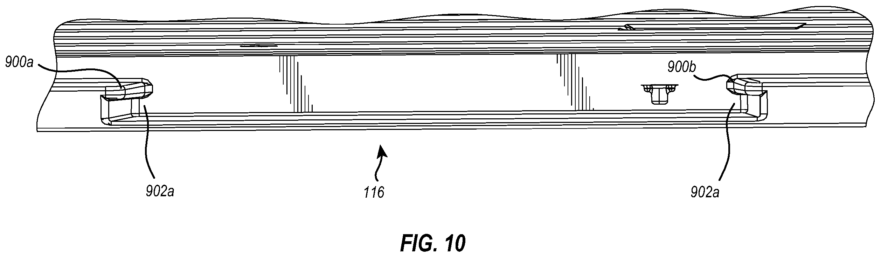

The flange edges 800a, 800b, and the channels 802a, 802b may be configured to engage complementary features of a corresponding pocket (see Figures 9 and 10). For example, the flange edges 800a, 800b may be received within complementary channels of a pocket, while the channels 802a, 802b may receive complementary flanges of the pocket. This interconnection may act to resist separation of the fist 110 from a corresponding pocket, such as in a direction corresponding to direction B described with respect to Figure 5. In addition, the flange edges 800a, 800b, and channels 802a, 802b may be positioned to abut corresponding features of the pocket so as to resist relative movement between adjacent panels in a direction corresponding to direction A described with respect to Figure 5. For example, outer edge portions of the upper surface 806 may engage a surface such as surface 122 of a pocket 116, as shown in Figure 3, thereby contributing to shear resistance between the panels.

As illustrated, the fist 110 may further include a narrower end 400 positioned at or near an outermost region of the edge, and a wider portion 804 positioned further inward from the edge. This variation in width may define an overall tapered or wedge-shaped configuration of the fist 110, which can facilitate guided insertion into a corresponding pocket and promote alignment during engagement of adjacent panels.

Figure 9 illustrates a close-up perspective view of a pocket 116. As shown, the pocket 116 may be defined as a recessed region extending inward from the rear surface 114, such that a surface 122 of the pocket 116 is set back from the rear surface 114. Pocket 116 may include one or more flanged ends 900a, 900b and corresponding channels 902a, 902b, which may be configured as complementary features to the flange edges 800a, 800b and channels 802a, 802b of the fist 110 described with respect to Figure 8. For example, the channels 902a, 902b may extend into a region of the edge of the panel adjacent to the pocket 116, and may be shaped to receive corresponding flange edges of a fist. In this manner, the pocket 116 and fist 110 may cooperatively interconnect to resist both separation and relative lateral movement between adjacent panels, as discussed above.

Pocket 116 may further include a wider end 402 located at or near an outermost region of the edge, and a narrower portion 904 positioned further inward from the edge. This configuration may define a tapered or wedge-shaped profile that is complementary to the tapered configuration of the fists disclosed herein, thereby facilitating alignment and guided engagement between adjacent panels.

The flanged ends 900a, 900b and channels 902a, 902b may, in some embodiments, define at least a portion of the tapered or wedge-shaped profile of the pocket 116. Similarly, corresponding flange edges 800a, 800b and channels 802a, 802b of the fist 110 may contribute to the tapered configuration.

Figure 10 illustrates a side view of the pocket 116, further showing the relative positioning of the flanged ends 900a, 900b and channels 902a, 902b, as well as the recessed surface 122. From this perspective, the depth and profile of the pocket 116 can be more clearly appreciated, including the manner in which the complementary features are arranged to receive and interconnect with a corresponding fist.

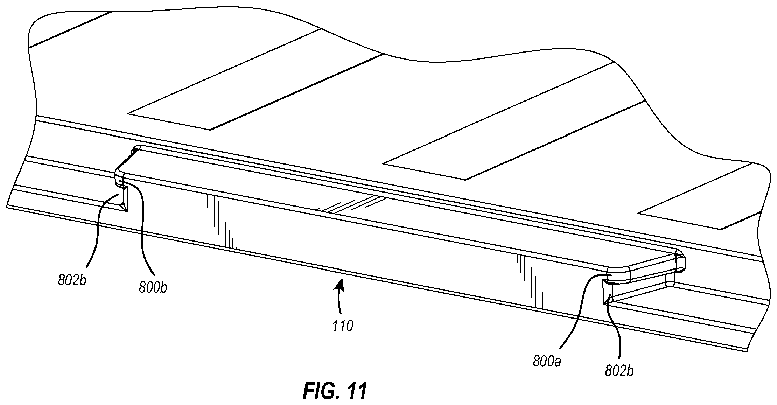

Figure 11 illustrates an alternative perspective view of a fist 110. This view further highlights the geometry of the upper surface 806, the flange edges 800a, 800b, and the channels 802a, 802b, as well as the tapered configuration extending between the narrower portion and the wider portion. As with the preceding figures, these features can be configured to cooperate with corresponding features of a pocket to provide multi-directional retention between adjacent panels.

Figure 12 illustrates an example assembly 1200 in which adjacent panels 102a and 102b are fully engaged with one another using the fists and pockets described herein. In this arrangement, the fists of one panel are received within corresponding pockets of the other panel, such that the panels are joined along respective edges. The panels 102a and 102b may be engaged by moving the fists into the pockets, for example, toward each other, until full engagement is achieved. When fully engaged, the panels may define respective joints 1202a and 1202b that are flush or substantially flush, such that outermost surfaces of the panels align to form a generally continuous surface across the assembly 1200. Although a seam or interface may remain visible, the cooperative engagement of the fists and pockets may reduce discontinuities at the joint.

In some embodiments, the engagement between the panels 102a and 102b may define a lap joint and/or a dovetail configuration. For example, complementary wedge-shaped features of the fists and pockets may interconnect to form a dovetail-type joint that resists relative movement between the panels. The wedge configuration may inhibit lateral or shear movement of the panels within a common plane, while also distributing loads across the engaged features. In certain implementations, the interconnected fists and pockets may be at least partially concealed within the body of the panels when coupled, such that the connection features are hidden from external view while maintaining structural integrity.

With reference to Figures 13 and 14, further details are provided concerning the connector 500 and its interaction with an aperture 602 and a recess 600 of adjacent panels 102a and 102b. Figure 13 shows a close-up view of 500, 602, and 600. Here, the assembly of panels 102a and 102b may be aligned such that the aperture 602 is aligned with the recess 600. An assembler can then install connector 500 by inserting arm 604 through the aperture 602 and then into the recess 600 such that 604 engages undercut 1300 of the recess 600.

The installation of connector 500 can form a tensioned connection that holds the panels 102a and 102b together. For example, this can include inserting and sliding arm 604 into position, or inserting and press-fitting arm 604 into the recess 600. In some embodiments, 606 may include a slot associated with the aperture 602, configured to receive arm 604 and tension against features of both the aperture 602 and the recess 600. For example, arm 604 may bear against tabs 1304 of the recess 600 and against corresponding tabs of the aperture 602 formed by 606, thereby generating opposing forces that place the connector 500 in tension. Thus, when installed, a portion of arm 604 is within the aperture 602, and a terminal end of arm 604 is within the recess 600, specifically within undercut 1300, such that the connector 500 applies a tension that retains the panels 102a and 102b in the assembled configuration.

Figure 14 illustrates a cross-sectional view of panels 102a and 102b when aligned and connected. In this view, the connector 500 is not shown, but the aperture 602 and recess 600 can be seen aligned with one another to define a passage through which the connector 500 may be inserted. In particular, the aperture 602 and recess 600 cooperate to provide a continuous passage that allows the arm 604 of the connector 500 to pass through the aperture 602 and into the recess 600, including into the undercut 1300, while a body portion of the connector 500 engages with the recessed portion 606 to establish a tensioned connection, as described above.

As further illustrated, a tack point 1302 may be defined within the recess 600. In some embodiments, the recess 600 may extend through a relatively large portion or thickness of the panel 102a, which may have a hollow or at least partially hollow interior. The tack point 1302, thus, may provide structural support by coupling or "tacking" the recess 600 to an outer wall, such as the front surface 112. In this manner, the tack point 1302 may act as a bridging structure between walls defining the hollow interior of the panel 102a, thereby reinforcing the panel while accommodating the recess 600 and its associated features.

### C. Aspects of example production processes

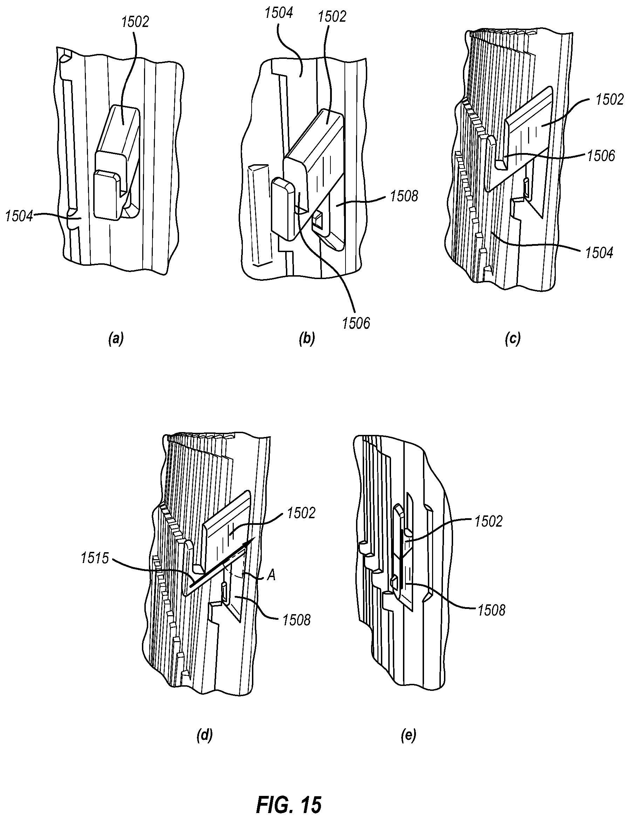

Turning now to Figures 15, 16, and 17, details are provided concerning aspects of example production processes according to one or more embodiments. Some example embodiments involve the use of a blow-molding process, which, in brief, creates a parison of melted plastic within a mold, such that when the mold closes, the plastic of the parison conforms to the interior of the mold to create the molded part. When the plastic has cooled, the part can be removed from the mold.

For example, Figure 15 illustrates a sequence of positions (a)-(e) of a moving core 1502 relative to a mold wall 1504 and a static feature 1508. As shown in Figure 15, various mechanisms and devices may be placed in a mold to impart features of desired size, configuration, and orientation to the finished molded part. Such features may include, but are not limited to, recesses, protrusions, pockets, and fists.

In Figure 15(a), the moving core 1502 is shown in a fully extended position relative to the mold wall 1504. In this configuration, the moving core 1502 projects outward from the mold wall 1504 into a mold cavity. Figure 15(b) illustrates a side perspective view of the moving core 1502 in the extended position. As shown, the moving core 1502 may be positioned adjacent to a static feature 1508, which may be fixed relative to the mold wall 1504. In some embodiments, the moving core 1502 may extend at an angle relative to the mold wall 1504. For example, the moving core 1502 may be oriented at an angle such as about 15 degrees, about 30 degrees, about 45 degrees, about 60 degrees, or other suitable angles relative to the mold wall 1504.

As further illustrated in Figure 15(b), the moving core 1502 may include a slot 1506 defined at or near a terminal end of the moving core 1502. The slot 1506 may extend along at least a portion of the moving core 1502 and may be configured to form a corresponding feature in a molded component. For example, the slot 1506 may be used to form an undercut feature, such as undercut 1300 shown in Figure 14, or another recessed and/or undercut feature of a panel.

Figure 15(c) illustrates a side view of the moving core 1502 in the extended position. From this view, the slot 1506 can be seen extending along the moving core 1502, and the angular orientation of the moving core 1502 relative to the mold wall 1504 can be more clearly appreciated.

Figure 15(d) illustrates the moving core 1502 in an extended configuration. In particular, a vector 1515 is shown, defining a direction of movement of the moving core 1502 at an angle A relative to the mold wall 1504. The angle A may correspond to the orientation of the moving core 1502 and may be, for example, about 15 degrees, about 30 degrees, about 45 degrees, about 60 degrees, or another suitable angle. As the moving core 1502 is retracted along the vector 1515 into the mold wall 1504, an outer surface of the moving core 1502 may become substantially flush with a surface of the static feature 1508. The moving core 1502 can initially be positioned in the extended configuration while the mold is open and a parison is introduced into the mold cavity, such as by being laid into the mold or blown into the mold. As the mold closes, the moving core 1502 may retract along vector 1515, thereby increasing the available space between the moving core 1502 and the static feature 1508 so that a sufficient amount of material from the parison is present to form an undercut feature.

Figure 15(e) illustrates a retracted configuration. This retracted configuration may define a molding position in which the moving core 1502 and the static feature 1508 cooperate to form a feature in a molded component. For example, the combined geometry of the moving core 1502 and the static feature 1508 may define a recess feature, such as recess 600, including one or more undercut portions formed by the slot 1506. In this manner, the moving core 1502 and static feature 1508 can cooperate to produce complex geometries within a molded panel. For example, the molded part can be formed around static feature 1508 and moving core 1502 as the parison is blown into the mold.

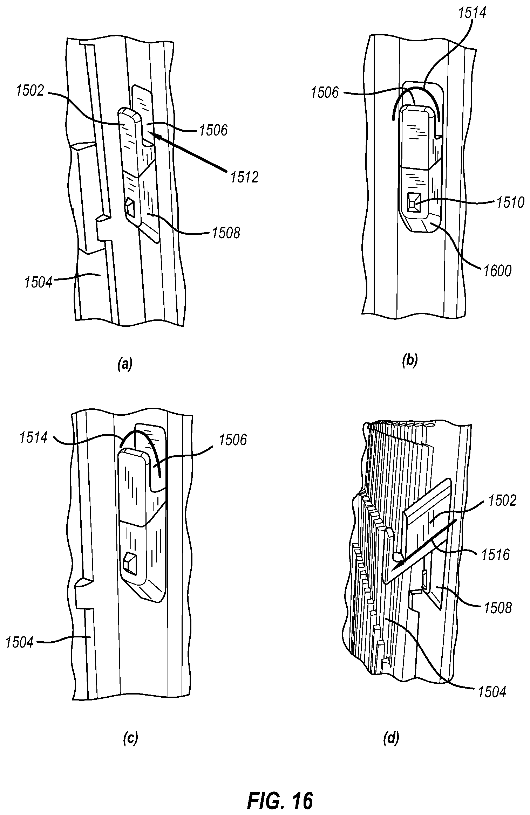

Figure 16 illustrates additional stages of the molding process involving the moving core 1502 and static feature 1508. In Figure 16(a), the moving core 1502 is shown in a retracted configuration relative to the mold wall 1504, for example, as described with respect to Figure 15(d). In this configuration, the moving core 1502 and static feature 1508 together define a cavity geometry for forming one or more features of a molded component. Additionally, moving the core proves a space 1512 defined by slot 1506 wherein material may flow to form an undercut feature.

Figure 16(b) illustrates a region 1514 located at or near the slot 1506 of the moving core 1502. During molding, a parison of material may flow around the moving core 1502 and into the region 1514. In some embodiments, the parison may flow into the slot 1506 to form an undercut feature in the resulting molded component, such as undercut 1300. As further shown, the static feature 1508 may include a surface 1600, which may be sloped or tapered to form a corresponding sloped surface of a recess feature in the molded component. In some embodiments, the moving core 1502 can initially be positioned in an extended configuration (shown in Figure 15) within the open mold as the parison is introduced, such as by being laid into the mold or blown into the mold cavity. As the mold closes, the moving core 1502 may retract toward the mold wall 1504, thereby increasing the available material at or near region 1514. This retraction can help ensure that a sufficient amount of material from the parison is present within region 1514 to form an undercut feature when the plastic conforms to the mold geometry.

Figure 16(c) illustrates a side view corresponding to the configuration shown in Figure 16(b). From this perspective, slot 1506 is more clearly visible in relation to region 1514. At this stage, the parison may have flowed and conformed to the geometry defined by the moving core 1502 and static feature 1508, including within the slot 1506, thereby forming the undercut feature in the molded component.

Figure 16(d) illustrates a removal stage following formation of the molded component. After the molded component has been formed, the mold may be opened, and the moving core 1502 may be extended along a vector 1516, which may be opposite or substantially the inverse of vector 1515 described above. Movement of the moving core 1502 along vector 1516 may urge the molded component away from the mold wall 1504. In some embodiments, a portion of the molded component may be supported, anchored, or abutted against another surface of the mold while the moving core 1502 is extended. As the moving core 1502 moves, the slot 1506 may be withdrawn from within the formed undercut feature without substantially deforming the undercut or related features. The angled orientation of the moving core 1502 may facilitate this withdrawal by guiding the slot 1506 out of engagement with the undercut, thereby enabling removal of the molded component without deforming the molded feature or other manipulation of the mold components. The then-formed molded component can be pulled out of the mold without being hindered by the slot 1506.

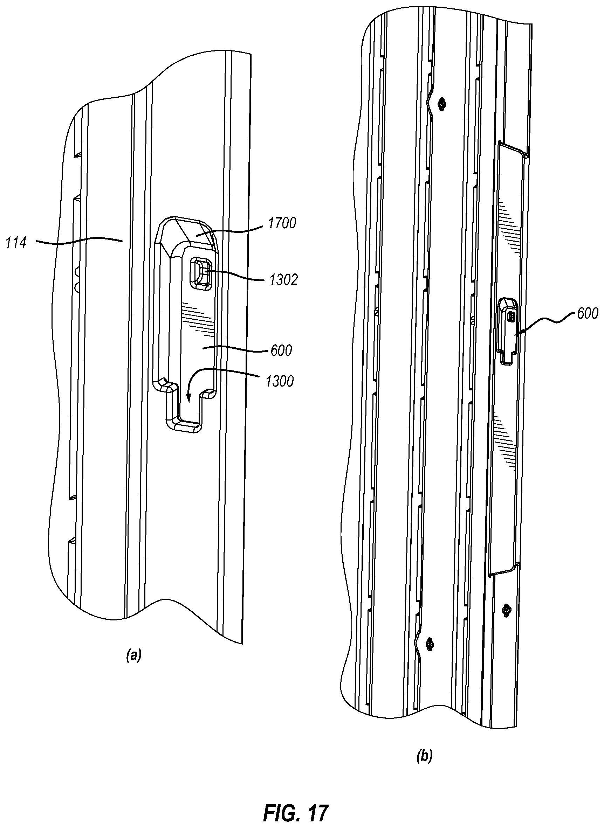

Figure 17 illustrates an example of a molded component (e.g., a panel or structure) and features formed using the processes described with respect to Figures 15 and 16. For example, the back surface 114 of a panel can be seen, along with a recess 600 formed therein. The recess 600 may include a sloped wall 1700, which in some embodiments may be formed by a surface such as surface 1600 of the static feature 1508. As further illustrated, a tack point 1302 may be formed within the recess 600, for example, by a protrusion such as protrusion 1510. In addition, an undercut 1300 can be seen within the recess 600, having been formed using the slot 1506 of the moving core 1502 and the associated processes described with respect to Figures 15 and 16. Figure 17(b) illustrates a zoomed view of the recess 600, further showing the formed undercut 1300, sloped wall 1700, and tack point 1302.

These features are illustrative, and it should be understood that other undercut features and recess geometries may be formed using similar methods. For example, the moving core 1502 and static feature 1508 may be shaped, positioned, and oriented to accommodate a variety of feature geometries in a molded component. Thus, the examples of Figures 15-17 are not intended to limit the scope of this disclosure, or the scope of any claims, in any way.

### D. Further example embodiments - group 1.

Embodiment 1. An apparatus, comprising: a first structure that defines one or more first complementary structures along an edge of the first structure; and a second structure that defines one or more second complementary structures along an edge of the second structure, and the first structure and second structure are configured to be removably connected by engagement of the first complementary structures with respective ones of the second complementary structures.

Embodiment 2. The apparatus as recited in any preceding embodiment, wherein one or both of the first structure and the second structure comprise a respective blow-molded structure with a hollow interior.

Embodiment 3. The apparatus as recited in any preceding embodiment, wherein the first complementary structures and the second complementary structures together define a dovetail configuration along the edges of the first structure and the second structure when the first structure and the second structure are connected to each other.

Embodiment 4. The apparatus as recited in any preceding embodiment, wherein one or both of the first structure and the second structure comprise a respective panel.

Embodiment 5. The apparatus as recited in any preceding embodiment, wherein the first complementary structures and the second complementary structures are integral with the respective structures that include them.

Embodiment 6. The apparatus as recited in any preceding embodiment, wherein the first structure comprises one or more second complementary structures along a second edge of the first structure.

Embodiment 7. The apparatus as recited in any preceding embodiment, wherein the second structure comprises one or more first complementary structures along a second edge of the second structure.

Embodiment 8. The apparatus as recited in any preceding embodiment, wherein the first complementary structures and the second complementary structures are configured to prevent lifting one of the first and second structures off of the other of the first and second structures when the first and second structures are connected together.

Embodiment 9. The apparatus as recited in any preceding embodiment, wherein the first structure and the second structure form a lap joint when they are connected together.

Embodiment 10. The apparatus as recited in any preceding embodiment, wherein the first complementary structures comprise respective pockets, and the second complementary structures comprise respective fists.

Embodiment 11. The apparatus as recited in any preceding embodiment, further comprising a connector configured to engage both the first structure and the second structure and to releasably retain the first structure and the second structure together.

Embodiment 12. The apparatus as recited in embodiment 11, wherein a portion of the connector is in tension when the connector retains the first structure and the second structure together.

Embodiment 13. The apparatus as recited in any of embodiments 11-12, wherein the connector compresses the first structure and the second structure together when the connector is engaged with the first structure and the second structure.

Embodiment 14. The apparatus as recited in any of embodiments 11-13, wherein the connector is elastically deformed when the connector retains the first structure and the second structure together.

Embodiment 15. The apparatus as recited in any of embodiments 11-14, wherein the connector comprises a single-piece structure.

Embodiment 16. The apparatus as recited in any of embodiments 11-15, wherein when connected together, the first structure and the second structure are connected edge-to-edge.

Embodiment 17. The apparatus as recited in any of embodiments 11-16, wherein the connector is configured to be at least partly received in, and engage, a receptacle cooperatively defined by the first structure and the second structure when they are connected together.

Embodiment 18. The apparatus as recited in embodiment 17, wherein the receptacle is defined by respective recesses of the first structure and the second structure.

Embodiment 19. The apparatus as recited in embodiment 18, wherein the recesses are partly aligned with each other when the first structure and the second structure are connected together.

### E. Further example embodiments - group 2.

Embodiment 1. A method for creating a feature in a molded part, comprising: inflating a parison of melted plastic; closing a mold about the parison, wherein the mold comprises a static feature arranged for contact with the parison when the mold is closed; adjusting a position of a moving core, located in the mold, from an extended position to a retracted position; with the retracted moving core and the static feature, imparting a feature to the plastic; and moving the moving core from the retracted position to the extended position, and removing the molded part from the mold.

Embodiment 2. The method as recited in any preceding embodiment, wherein the moving core is in the extended position while the parison is being created.

Embodiment 3. The method as recited in any preceding embodiment, wherein the moving core begins moving into the retracted position as the mold is closing and the parison begins to contact the moving core.

Embodiment 4. The method as recited in any preceding embodiment, wherein after the mold is closed, the plastic encloses the moving core and the static feature.

Embodiment 5. The method as recited in any preceding embodiment, wherein the moving core moves to the extended position as one or more ejectors extend to eject the molded part from the mold.

Embodiment 6. The method as recited in any preceding embodiment, wherein the moving core moves out of the feature as the mold is opened after creation of the molded part.

### F. Further example embodiments - group 3.

Embodiment 1. An assembly, comprising: a first structure comprising a first edge, the first edge comprising a fist; and a second structure comprising a second edge, the second edge comprising a pocket configured to receive the fist; wherein the fist comprises a wedge-shaped profile that is narrower at an outer portion of the first edge and wider at a location spaced inward from the outer portion, and the pocket comprises a complementary wedge-shaped profile configured to receive the fist by relative movement of the first structure and the second structure in a first direction; wherein the fist and the pocket are configured to resist relative movement of the first structure and the second structure in a second direction transverse to the first direction; and wherein the fist includes a flange configured to engage a corresponding channel of the pocket to resist separation of the first structure from the second structure in a third direction transverse to both the first direction and the second direction.

Embodiment 2. The assembly as recited in embodiment 1, wherein one or both of the first structure and the second structure comprises a respective blow-molded structure with a hollow interior.

Embodiment 3. The assembly as recited in any of embodiments 1-2, wherein the fist and the pocket together define a dovetail configuration along the first edge and the second edge when the first structure and the second structure are connected to each other.

Embodiment 4. The assembly as recited in any of embodiments 1-3, wherein one or both of the first structure and the second structure comprises a respective panel.

Embodiment 5. The assembly as recited in any of embodiments 1-4, further comprising a plurality of additional fists and a plurality of additional pockets.

Embodiment 6. The assembly as recited in any of embodiments 1-5, wherein the second structure comprises one or more fists along a third edge of the second structure that is opposite the second edge.

Embodiment 7. The assembly as recited in any of embodiments 1-6, wherein the first structure and the second structure form a lap joint when the first structure and the second structure are connected together.

Embodiment 8. The assembly as recited in any of embodiments 1-7, further comprising a connector configured to engage both the first structure and the second structure and to releasably retain the first structure and the second structure together.

Embodiment 9. The assembly as recited in embodiment 8, wherein a portion of the connector is in tension when the connector retains the first structure and the second structure together.

Embodiment 10. The assembly as recited in any of embodiments 8-9, wherein the connector is elastically deformed when the connector retains the first structure and the second structure together.

Embodiment 11. The assembly as recited in any of embodiments 8-10, wherein the connector is configured to be at least partly received in, and engage, an aperture defined by the first structure and a recess defined by the second structure when the first structure and the second structure are connected together.

### G. Further example embodiments - group 4

Embodiment 1. An assembly comprising: a first structure and a second structure configured to be releasably engaged with one another in an end-to-end configuration; a first retention mechanism comprising a fist and a pocket defined along respective edges of the first structure and the second structure, the fist and the pocket having complementary wedge-shaped profiles configured to permit engagement by relative movement of the first structure relative to the second structure in a first direction, and to resist relative movement in a second direction transverse to the first direction; a second retention mechanism comprising one or more flanges associated with the fist, the one or more flanges configured to (i) engage a corresponding channel of the pocket and (ii) resist separation of the first structure and the second structure in a third direction transverse to both the first direction and the second direction; and a third retention mechanism comprising a connector configured to engage both the first structure and the second structure to retain the first structure and the second structure in the engaged configuration.

Embodiment 2. The assembly as recited in embodiment 1, wherein the first retention mechanism defines a dovetail configuration between the first structure and the second structure when in the engaged configuration.

Embodiment 3. The assembly as recited in any of embodiments 1-2, wherein the connector is configured to be at least partially received within an aperture of the first structure and a recess of the second structure.

### H. Further example embodiments - group 5

Embodiment 1. A method for creating a feature in a molded part, comprising: inflating a parison of melted plastic to form a molded part; closing a mold about the parison, wherein the mold comprises a static feature and a moving core, wherein both the static feature and the moving core are arranged for contact with the parison when the mold is closed; adjusting a position of the moving core from an extended position to a retracted position; forming, with the static feature, a recessed portion in the molded part; forming, with the moving core, an undercut feature in the molded part adjacent to the recessed portion; and moving the moving core from the retracted position to the extended position so as to release the molded part from the mold.

Embodiment 2. The method as recited in embodiment 1, wherein the undercut feature is formed while the moving core is in the retracted position.

Embodiment 3. The method as recited in any of embodiments 1-2, wherein the moving core comprises a slot.

Embodiment 4. The method as recited in any of embodiments 1-3, wherein after the mold is closed, the parison encloses the moving core and the static feature.

Embodiment 5. The method as recited in any of embodiments 1-4, wherein the moving core moves to the extended position at an angle relative to a wall of the mold.

Embodiment 6. The method as recited in any of embodiments 1-5, wherein in the retracted position, the moving core is flush with the static feature.

Although this disclosure has been described in terms of certain embodiments, other embodiments apparent to those of ordinary skill in the art are also within the scope of this disclosure. Accordingly, the scope of the disclosure is intended to be defined only by the claims which follow.

## Claims

1. An assembly, comprising:
a first structure comprising a first edge, the first edge comprising a fist; and
a second structure comprising a second edge, the second edge comprising a pocket configured to receive the fist; and
wherein the fist comprises a wedge-shaped profile that is narrower at an outer portion of the first edge and wider at a location spaced inward from the outer portion, and the pocket comprises a complementary wedge-shaped profile configured to receive the fist by relative movement of the first structure and the second structure in a first direction,
wherein the fist and the pocket are configured to resist relative movement of the first structure and the second structure in a second direction transverse to the first direction, and
wherein the fist includes a flange configured to engage a corresponding channel of the pocket to resist separation of the first structure from the second structure in a third direction transverse to both the first direction and the second direction.

2. The assembly as recited in claim 1, wherein one or both of the first structure and the second structure comprises a respective blow-molded structure with a hollow interior.

3. The assembly as recited in claim 1, wherein the fist and the pocket together define a dovetail configuration along the first edge and the second edge when the first structure and the second structure are connected to each other.

4. The assembly as recited in claim 1, wherein one or both of the first structure and the second structure comprises a respective panel.

5. The assembly as recited in claim 1, further comprising a plurality of additional fists and a plurality of additional pockets.

6. The assembly as recited in claim 1, wherein the second structure comprises one or more fists along a third edge of the second structure that is opposite the second edge.

7. The assembly as recited in claim 1, wherein the first structure and the second structure form a lap joint when the first structure and the second structure are connected together.

8. The assembly as recited in claim 1, further comprising a connector configured to engage both the first structure and the second structure and to releasably retain the first structure and the second structure together.

9. The assembly as recited in claim 8, wherein a portion of the connector is in tension when the connector retains the first structure and the second structure together.

10. The assembly as recited in claim 8, wherein the connector is elastically deformed when the connector retains the first structure and the second structure together.

11. The assembly as recited in claim 8, wherein the connector is configured to be at least partly received in, and engage, an aperture defined by the first structure and a recess defined by the second structure when the first structure and second structure are connected together.

12. An assembly comprising:
a first structure and a second structure configured to be releasably engaged with one another in an end-to-end configuration;
a first retention mechanism comprising a fist and a pocket defined along respective edges of the first structure and the second structure, the fist and the pocket having complementary wedge-shaped profiles configured to permit engagement by relative movement of the first structure to the second structure in a first direction, and to resist relative movement in a second direction transverse to the first direction;
a second retention mechanism comprising one or more flanges associated with the fist, the one or more flanges configured to (i) engage a corresponding channel of the pocket and (ii) to resist separation of the first structure and the second structure in a third direction transverse to both the first direction and the second direction; and
a third retention mechanism comprising a connector configured to engage both the first structure and the second structure to retain the first structure and the second structure in the engaged configuration.

13. The assembly as recited in claim 12, wherein the first retention mechanism defines a dovetail configuration between the first structure and the second structure when in the engaged configuration.

14. The assembly as recited in claim 12, wherein the third retention mechanism is configured to be at least partially received within an aperture of the first structure and a recess of the second structure.

15. A method for creating a feature in a molded part, comprising:
inflating a parison of melted plastic to form a molded part;
closing a mold about the parison, wherein the mold comprises a static feature and a moving core, wherein both the static feature and the moving core are arranged for contact with the parison when the mold is closed;
adjusting a position of the moving core, from an extended position to a retracted position;
forming, with the static feature, a recessed portion in the molded part;
forming, with the moving core, an undercut feature in the molded part adjacent to the recessed portion; and
moving the moving core from the retracted position to the extended position so as to release the molded part from the mold.

16. The method as recited in claim 15, wherein the undercut feature is formed while the moving core is in the retracted position.

17. The method as recited in claim 15, wherein the moving core comprises a slot.

18. The method as recited in claim 15, wherein after the mold is closed, the parison encloses the moving core and the static feature.

19. The method as recited in claim 15, wherein the moving core moves to the extended position at an angle relative to a wall of the mold.

20. The method as recited in claim 15, wherein in the retracted position, the moving core is flush with the static feature.
